# FASCICULE DE BREVET EUROPEEN

(11) **EP 1 325 939 B1**
(45) Date de publication et mention de la délivrance du brevet: **14.06.2006**
(21) Numéro de dépôt: 03290616.6
(22) Date de dépôt: 25.01.1999
(51) Int. Cl.: C07F 7/18, C08G 77/04, B01D 53/00

(54) **Procédé de préparation de co-gels incorporant des motifs polyazacycloalcanes et utilisation**
Verfahren zur Herstellung von polyazacycloalkan-enthaltenden Cogelen und deren Verwendung
Process for preparing co-gels having polyazacycloalkane moieties and their use

(30) Priorité: 26.01.1998 FR 9800785
(43) Date de publication de la demande: 09.07.2003
(62) Demande divisionnaire de: 99901626.4
(73) Titulaire: L'Air Liquide S. A. à Directoire et Conseil de Surveillance pour l'Etude et l'Exploitation des Procédés Georges Claude, 75321 Paris Cedex 07 (FR)
(72) Inventeur: Corriu, Robert, 34090 Montpellier (FR); Reye, Catherine, 34080 Montpellier (FR); Mehdi, Ahmad, 34090 Montpellier (FR); Dubois, Gérard, C/O Université de Bourgogne, 6, boulevard Gabriel, 21100 Dijon (FR); Chuit, Claude, 30250 Junas (FR); Denat, Franck, 21000 Dijon (FR); Roux-Fouillet, Bruno, 21000 Dijon (FR); Guilard, Roger, 21121 Fontain les Dijon (FR); Lagrance, Gilles, 91470 Forges les Bains (FR); Brandes, Stéphane, 21100 Dijon (FR)
(74) Mandataire: Conan, Philippe Claude

(56) Documents cités:
- LUITJES, HENDRIKUS ET AL: "Reactions of the butyllithiums with tertiary oligoethylenepolyamines" TETRAHEDRON (1997), 53(29), 9977-9988 CODEN: TETRAB;ISSN: 0040-4020, 1997, XP002075423
- GROS, C. ET AL.: "new silica-gel-bound polyazacycloalkanes and characterization of their copper(ii9 complexes using electron spin resonance spectroscopy" JOURNAL OF THE CHEMICAL SOCIETY, DALTON TRANSACTIONS, 1996, pages 1209-1214, XP002075424

## Description

L'invention a pour objet un nouveau procédé de préparation d'un matériau, utilisable dans le domaine de la séparation et de la purification des gaz. Les techniques actuelles de séparation, que ce soit la distillation cryogénique ou l'adsorption sur zéolithes et les techniques de purification par distillation cryogénique ou catalytique des gaz industriels ne sont pas toujours optimisées, ni en terme économique ni en terme de pureté. De nombreux travaux ont par ailleurs montré que des gaz tels que l'oxygène, l'hydrogène ou le monoxyde de carbone réagissent sélectivement et réversiblement avec des complexes de métaux de transition. Ainsi, les complexes de cobalt (II) du cyclame ou du cyclène fixent aisément l'oxygène de l'air (Machida R., Kimura E., Kodama M., Inorg. Chem. 1983, 22, 2055-2061.), et conduisent à des espèces µ-peroxydiques en milieux aqueux. Cependant, la durée de vie des complexes oxygénés en solution est limitée car ces derniers peuvent subir des réactions de dégradation irréversibles (Martell A. E., Basak A. K., Raleigh C. J., Pure Appl. Chem. 1988, 60, 1325-1329). Par ailleurs, la désoxygénation de ces espèces ne peut être réalisée par simple diminution de la pression partielle en dioxygène. Une amélioration de la réversibilité, nécessaire dans un procédé de séparation, nécessite une stabilisation de l'espèce intermédiaire superoxydique. Le greffage du ligand sur une matrice solide doit à la fois ralentir l'évolution de l'espèce superoxydique en espèce µ-peroxydique, limiter les réactions d'hydrolyse et faciliter la manipulation du complexe actif (Tsuchida E., Nishide, H. Top. Curr. Chem. 1986, 32, 63-99). L'incorporation de complexes de cobalt avec des porphyrines, des phtalocyanines,ou des cyclidènes dans des polyméres organiques ou inorganiques, comme les gels de silice, et l'étude de l'interaction de ces matériaux avec l'oxygène, a déjà fait l'objet de plusieurs travaux. Le plus souvent, le complexe est synthétisé dans une première étape puis immobilisé sur le polymère par une liaison dative entre un atome d'azote d'un motif pyridine ou imidazole et le métal (Nishide H., Suzuki T., Kawakami H., Tsuchida E., J, Phys, Chem. 1994, 98, 5084-5088; Cameron J. H., Graham S., J. Chem. Soc. Dalton Trans. 1992, 385-391; Tashkova K., Andreev A., Inorg. Chim. Acta 1984, 84, 31-34; Leal O., Anderson D. L., Bowman R.G., Basolo F., Burwell Jr. R. L., J. Am. Chem. Soc. 1975, 97, 5125-5129). Une autre approche consiste à fixer dans un premier temps le ligand sur le polymère par une liaison covalente et à métaller ensuite (Wöhrle D., Gitzel J., Krawczyk G., Tsuchida E., Ohno H., Okura I., Nishisaka T., J. Macromol. Sci. Chem. 1988, A25, 1227-1254.; Barnes M. J., Drago R. S., Balkus Jr. K. J., J. Am. Chem. Soc. 1988, 110, 6780-6785). Ainsi, le greffage sur gel de silice de ligands tétraazamacrocycliques et l'étude de la métallation de ces matériaux ont été réalisés (Gros C., Rabiet F., Denat F., Brandes S., Chollet H., Guilard R., J. Chem. Soc. Dalton Trans. 1996, 1209-1214). Le processus sol-gel a été étudié en détail (Hench L. L., West J. K., Chem. Rev. 1990, 90, 33-72) et présente une importance majeure dans la chimie des matériaux. Un des principaux intérêts de ce procédé réside dans une grande homogénéité des matériaux obtenus, leur conférant ainsi des propriétés spécifiques. Les précurseurs de type alcoxyde sont parmi les plus utilisés. Ainsi, l'hydrolyse du tétraéthoxysilane en solution dans un solvant organique, un alcool par exemple, conduit à une dispersion colloïdale de particules issues de la polymérisation du précurseur appelée sol. Ce sol évolue vers la formation d'un gel. Le séchage de ce gel par évaporation conduit à un xérogel qui peut lui-même être transformé en verre ou céramique. Plus récemment, cette technique a permis l'élaboration de nouveaux matériaux hybrides organiques-inorganiques (Corriu R. J. P., Leclercq, D., Angew. Chem. Int. Ed. 1996, 35, 1420-1436; Schubert U., Hüsing N., Lorenz A., Chem. Mater. 1995, 7, 2010-2027). Le précurseur est alors un composé organique porteur d'une ou plusieurs terminaisons de type trialcoxysilyle [Si(OR₃)] ou silyle [SiH₃]. Diverses espèces organiques ont été utilisées tels des composés aromatiques, des motifs acétyléniques ou des amines linéaires et cycliques (Corriu R. J. P., Leclercq D., Angew. Chem. Int. Ed. 1996, 35, 1420-1436; Khatib I. S., Parish R. V., J. Organomet. Chem. 1989, 369, 9-16; Tsuda T., Fujiwara T., J. Chem. Soc., Chem. Commun. 1992, 1659-1661). Battioni et coll. ont incorporé par cette voie des porphyrines de manganèse et de fer dans un gel de silice et testé les propriétés catalytiques de ces nouveaux matériaux (Battioni P., Cardin E., Louloudi M., Schöllhorn B., Spyroulias G. A., Mansuy D., Traylor T. G., Chem. Commun. 1996, 2037-2038).

L'ancrage d'un complexe sur un polymère par une liaison dative entre une base et le métal, présente l'avantage d'activer le complexe et de stabiliser l'espèce superoxydique par l'encombrement de l'une des faces du complexe. Cependant, la liaison ainsi formée est faible. Le greffage du ligand par une liaison covalente conduit quant à lui à un matériau plus résistant. De façon générale, les méthodes d'incorporation des complexes de métaux de transition dans des matrices organiques ou inorganiques n'ont jusqu'ici pu conduire à des matériaux compatibles avec les exigences du génie des procédés et donc utilisables dans des procédés industriels. En particulier, les caractéristiques d'un tel matériau doivent pouvoir être ajustées en termes de surface spécifique, de porosité, que ce soit le rayon, la forme ou la distribution de la taille des pores, et de granulométrie. La demanderesse a trouvé que le matériau obtenu par le procédé objet de la présente invention, permet de résoudre les problèmes exposés ci-dessus. L'invention a pour objet un procédé de préparation d'un co-gel de polysiloxane métallée, carctérisé en ce que :
a) l'un fait réagir un composé de formule (I): 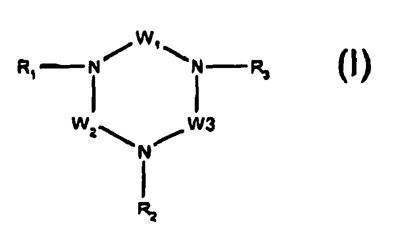
dans laquelle :
W₁, W₂ et W₃, identiques ou différents, représentent indépendamment les uns des autres, chacun un radical divalent choisi parmi ceux représentés par la formule générale (A):

   -[(CT₁T₂)ₙ-[N(R₄)]ₚ-(CT₃T₄)ₘ]ₗ- (A)
dans laquelle:
p représente un nombre entier égal à 0 ou à 1,
l représente un nombre entier égal à 1 ou à 2,
n et m, identiques ou différents, représentent chacun, indépendamment l'un de l'autre, un nombre entier inférieur ou égal à 3 et supérieur ou égal à 1,
T₁, T₂, T₃ et T₄, identiques ou différents, représentent ou bien chacun, indépendamment les uns des autres, un atome d'hydrogène, un radical alkyle, linéaire ou ramifié, compor tant de 1 à 15 atomes de carbone, ou un radical [(hétéro)aryl]alkyle comportant de 7 à 12 atomes de carbone, ou bien CT₁T₂ et/ou CT₃T₄ représente un groupe divalent -(C=O)-,
R₄ représente, un atome d'hydrogène, un radical alkyle, linéaire ou ramifié, comportant de 1 à 15 atomes de carbone, non substitué ou substitué par ou plusieurs groupes fonctionnels, un radical [(hétéro)aryl]alkyle comportant de 7 à 12 atomes de carbone, ou un radical représenté par la formule générale (B₁):

-[CH₂-CH(OH)]_{y}-(CH₂)ₒ-(Q)_{q}-(CH₂)ᵣ-(Ar)ₛ-(CH₂)ₜ-(U)ᵤ-(CH₂)ᵥ-Si(X)₃ (B₁),

dans lequel:
o, r, t, v, identiques ou différents, représentent chacun, indépendamment les uns des autres, un nombre entier supérieur ou égal à 0 et inférieur ou égal à 6,
y, q, s et u, identiques ou différents, représentent indépendamment les uns des autres un nombre entier supérieur ou égal à 0 et inférieur ou égal à 1,
Q et U, identiques ou différents, représentent chacun, indépendamment l'un de l'autre un atome d'oxygène, un atome de soufre ou un des groupes, -O-CO-, -CO-O-, -NH-CO--CO-NH- ou -NH-,
Ar représente un groupe arylène et notamment un groupe phénylène,
X représente un atome d'hydrogène ou un des radicaux méthoxy ou éthoxy, étant entendu,
que lorsque q est égal à 1, la somme y + o est différente de 0,
que lorsque q est égal à 1 et que u est égal à 0, la somme r+t+s+v est différente de 0,
que lorsque u est égal à 1, v est différent de 0,
que lorsque u est égal à 1 et que q est égal à 0, la somme y + o+r+s+t est dificrcnte de 0,
que lorsque s est égal à 0, et que q et u sont chacun égaux à 1, la somme r + t est différente de 0, et
que la somme y + o + r + t + v est inférieure ou égale à 12 ;
R₁ et R₂, et R₃, identiques ou différents, représentent chacun, indépendamment les uns des autres et de R₄, un atome d'hydrogène, un radical alkyle, linéaire ou ramifié, comportant de 1 à 15 atomes de carbone, non substitué ou substitué par ou plusieurs groupes fonctionnels, ou un radical [(hétéro)aryl]alkyle comportant de 7 à 12 atomes de carbone, ou un radical représenté par la formule générale (B₁), telle que définie précédemment, étant entendu que le noyau polyazacycloalcane du composé de formule (I) comporte au plus 30 atomes de carbone cycliques et au plus 6 atomes d'azote cycliques et qu'au moins un de ces azotes cycliques est substitué par un radical de formule (B).

Comme composés de formule (I) comportant trois atomes d'azote cycliques, on peut citer par exemple, les composés dérivés du 1,4,7-triazacyclononane, du 1,4,7-triazacyclodécane ou du 1,5,8-triazacyclododécane. Comme composé de formule (I) comportant quatre atomes d'azote cycliques, on peut citer par exemple les composés dérivés du 1,4,7,10-tétraazacyclododécanc (cyclène), du 1,4,7,10-tétraazacyclotridécane, du 1,4,7,10-tétraazacyclotétradécane, du 1,4,8,11-tétraazacyclotétradécane (cyclame), du 1,4,8,12-tétraazacyclopentadécane, du 1,5,9,13-tétraazacyclohexadécane, ou du 1,5,10,14-tétraazacyclooctadécane. Comme composés de formule (I) comportant cinq atomes d'azote cycliques, on peut citer par exemple, les composées dérivés du 1,4,7,10,13-pentaazacyclopentadécane, du 1,4,7,11,15-pentaazacyclooctadécane, ou du 1,5,9,13,17-pentaazacyclooctadécane

Comme composés de formule (I) comportant six atomes d'azote cycliques, on peut citer par exemple, les composés dérivés du 1,4,7,10,13,16-hexaazacyclooctadécane ou du 1,5,9,13,17,20-hexaazacyclotétracosane.
Par groupe fonctionnel, on désigne notamment dans les définitions de R₁, R₂, R₃ et R₄, les groupes carboxy (CO₂H), carboxamido (CONH₂), sulfo (SO₃H), dihydrogénophosphonate (PO₃H₂), sous forme estérifiée.

L'invention a notamment pour objet,
- soit un procédé tel que défini précédemment, pour le quel dans la formule (I), W₁, W₂ et W₃ ,identiques ou différents, représentent un radical de formule (A₁), correspondant à la formule (A) telle que définie précédemment, dans laquelle p est égal à 0, et la somme n + m est égale à 2 ou à 3,
- soit un procédé tel que défini précédemment, pour lequel dans la formule (1), W₁ représente un radical divalent de formule (A₂), correspondant à la formule (A) telle que définie précédemment, dans laquelle p est égal à 1, et la somme n + m est égale à 2 ou à 3, et W₂ et W₃, identiques ou différents, représentent un radical de formule (A₁),
- soit un procédé tel que défini précédemment, pour lequel dans la formule (I), W₁ et W₂, identiques ou différents, représentent un radical divalent de formule (A₂) et W₃, représente un radical de formule (A₁).

L'invention a plus particulièrement pour objet,
- soit un procédé tel que défini précédemment, pour lequel dans la formule (1),1 1 est égal à 1 et, ou bien W₁, W₂ et W₃, représentent chacun le radical divalent -CH₂-CH₂₋CH₂-, ou bien l'un quelconque des trois groupes W₁, W₂ ou W₃ représente le radical divalent -CH₂-GH₂-CH₂-, et chacun des deux autres W₂ et W₃, représente le radical divalent -CH₂-CH₂-;
- soit un procédé tel que défini précédemment, pour lequel dans la formule (I), 1 est égal à 1 et, ou bien l'un quelconque des trois groupes W₁, W₂ ou W₃ représente le radical -CH₂-CH₂-CH₂-N(R₄)-CH₂-CH₂, l'un quelconque des deux groupes restant représente le radical -CH₂-CH₂- et le dernier groupe représente le radical -CH₂-CH₂-CH₂₋, ou bien l'un quelconque des trois groupes W₁ ,W₂ ou W₃ représente le radical -CH₂₋CH₂-CH₂-N(R₄)-CH₂-CH₂-CH₂- ,et les deux autres groupes représentent chacun le radical -CH₂-CH₂-CH₂-.

Le composé de formule (I) peut être non substitué ou substitué; lorsqu'il est substitué, il s'agit par exemple de celui substitué par un ou plusieurs radicaux alkyle comportant de 1 à 15 atomes de carbones, les radicaux benzyle, picolyle ou phénéthyle, tel que par exemple, le 6-dodécyl 1,4,8,11-tétraazacyclotétradécane, le 3-dodécyl 1,5,9,13-tétraazacyclohexadécane, le 3-dodécyl 1,5,10,14-tétraazacyclooctadécane, le 5,5,7,12,12,14-hexaméthyl 1,4,8,11-tétraazacyclotétradécane, le 1,4,7,10,13-pentaéthyl 1,4,7,10,13,16-hexaazacyclooctadécane, le 1,4,7,10-tétraéthyl 1,4,7,10,13-pentaazacyclopentadécane, le 1-méthyl 1,4,3,1 1-tétraazacyclotftmdécane, le 1-benzyl 1,4,8,11-tétraazacyclotétradécane, le 1-[(2-pyridyl) methyl] 1,4,8,11-tétraazacyclotétradécane, le 1-[(3-pyridyl) methyl] 1,4,8,11-tétraazacyclotétradécane, ou le 1,4-dibenzyl 1,4,8,11-tétraazacyclotétradécane.

Selon un aspect particulier de la présente invention, celle-ci a pour objet un procédé tel que défini précédemment, pour lequel dans la formule (I), les radicaux R₁, R₂, R₃ et R₄, représentent soit un radical (B), soit un atome d'hydrogène.

Selon un autre aspect particulier de la présente invention, celle-ci a pour objet un procédé tel que défini précédemment, pour lequel dans la formule (1), R₁, R₂, R₃ et R₄, représentent soit un radical (B₁), soit un radical -(CH₂)_{w}-C(=O)-V dans lequel V représente un des radicaux NH₂, ou OR₈ dans lequel R₈ représente un radical alkyle comportant de 1 à 4 atomes de carbone, et w un nombre entier supérieur ou égal à 1 et inférieur ou égal à 6.

Dans une variante préférée de la présente invention, le radical de formule (B₁) telle que définie précédemment, est choisi parmi les radicaux 3-silyl propyle, (4-silyl phényl) méthyle, 3-(triéthoxysilyl) propyle, 3-[[3-(triéthoxysilyl) propyl] oxy] 2-hydroxy propyle, [4-[[[3-(triéthoxysilyl) propyl] amino] méthyl] phényl] méthyle, 4-[(triéthoxysilyl) phényl] propyle, 3-oxo 3-[[3-(triéthoxysilyl) propyl] oxy] propyle ou 2-oxo 2-[[3-(triéthoxysilyl) propyl] amino] éthyle.

L'invention a tout particulièrement pour objet un procédé tel que défini précédemment, pour lequel les composés de formule (I) sont les suivants :
le 1,4,8,11-tétrakis[3-(triéthoxysilyl) propyl] 1,4,8,11-tétraazacyelotétradécane,
le 1,4,8,11-tétrakis[[4-(triéthoxysilyl) phényl] méthyl] 1,4,8,11-tétraazacyclotétradécane;
le 1,4,8,11-tétraazacyclotétradécane-1,4,8,11-tétrapropanoate de tétra[3-(triéthoxysilyl) propyle] le 1,4,8,11-tétrakis(3-silyl propyl) 1,4,8,11-tétraazacyclotétradécane;
le 1,4,8,11-tétrakis[(4-silyl phényl) méthyl] 1,4,8,11-tétraazacyclotétradécane;
le N₁,N₂,N₃,N₄-tétrakis[3-(triéthoxysilyl) propyl] 1,4,8,11-tétraazacyclotétradécane-1,4,8,11-tétraacétamide ;
le 4,11-bis[[4-(triéthoxysilyl) phényl] méthyl] 1,4,8,11-tétraazacyclolétradécane-7,14-dione.

On peut préparer le composé de formule (I) telle que définie précédemment,
a) en faisant réagir particulièrement, un composé de formule (C₁):

   Z'-(CH₂)ₒ-(Q)_{q}-(CH₂)ᵣ-(Ar)ₛ-(CH₂)ₜ-(U)ᵤ-(CH₂)ᵥ-Si(x)₃ (C₁),

   dans laquelle :
   o, q, r, s, t, u, v, Q, Ar, U et X ont la même définition pour la formule (B₁) telle que définie précédemment,
   Z' représente soit un radical halo, notamment un radical bromo ou une radical iodo, soit un groupe oxiran-2-yle, soit un groupe éthényle,
   la somme q + s est égale à 0 ou à 1, étant entendu
   que lorsque q est égal à 1, et que Z' représente un radical halo, o est différent de 0,
   que lorsque q est égal à 1 et que u est égal à 0, la somme r+s+t+v est différente de 0,
   que lorsque u est égal à 1, v est différent de 0,
   que lorsque u est égal à 1 et que q est égal à 0, la somme v+r+s+t est différente de 0,
   que lorsque s est égal à 0, et que q et u sont chacun égaux à 1, la somme r +t est différente de 0, et
   que la somme o + r + t + v, est inférieure à 6,
   et notamment le (triéthoxy) (3-ivdopropyl) silane, le 2-[[[3-(triéthoxysilyl) propyl] oxy] méthyl]oxlranne, le N-[[4-(bromométhyl) phényl] méthyl] N-[3-(triéthoxysilyl) propyl1 aminele (triéthoxy) [(4-iodométhyl) phG-nyl] silane, le propènoate de 3-(triéthoxysilyl) propyle ou le N-[3-(triéthoxysilyl) propyl] bromoacétamide
   avec un composé de formule (I'): 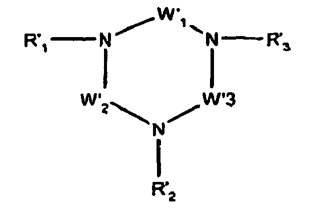
   dans laquelle :
   W'₁, W'₂ et W'₃, identiques ou différents, représentent indépendamment les uns des autres, chacun un radical divalent choisi parmi ceux représentés par la formule générale (A'):

      -[(CT₁T₂)ₙ-[N(R'₄)]ₚ-(CT₃T₄)ₘ]ₗ- (A')
   dans laquelle,
   l, p, n, m, T₁, T₂, T₃ et T₄ ont la même définition que pour la formule (A) telle que définie précédemment et
   R'₄ représente, un atome d'hydrogène, un radical alkyle, linéaire ou ramifié, comportant de 1 à 15 atomes de carbone, ou un radical [(hétéro)aryl]alkyle comportant de 7 à 12 atomes de carbone, R'₁ et R'₂, et R'₃, identiques ou différents, représentent chacun, indépendamment l'un de l'autre et de R₄, un atome d'hydrogène, un radical alkyle, linéaire ou ramifié, comportant de 1 à 15 atomes de carbone,ou un radical [(hétéro)aryl]alkyle comportant de 7 à 12 atomes de carbone,
   étant entendu que le noyau polyazacycloalcane du composé de formule (I) comporte au plus 30 atomes de carbone cycliques et au plus 6 atomes d'azote cycliques qu'au moins un de ces atomes d'azote cycliques est non substitué,
   pour former le composé de formule (I) tel que défini précédemment et, si désiré,
b) en fonctionnalisant tout ou partie des azotes cycliques non substitués, dudit composé de formule (I), pour former un composé de formule (Id), correspondant à la formule (I) telle que définie précédemment, dans laquelle au moins un des R₁, R₂, R₃ ou R₄, représente un radical -(CH₂)_{w}-C(=O)-V, dans lequel w et V sont tels que définis précédemment.

Le métal intervenant dans la composition du co-gel de polysiloxane métallé est est notamment choisi parmi le cobalt ou le cuivre.

Dans un dernier aspect de la présente invention, celle-ci a pour objet l'utilisation du co-gel métallé préparé par le procédé tel que défini précédemment, pour séparer un gaz déterminé d'un mélange de gaz; dans des conditions permettant l'absorption dudit gaz à séparer, suivie d'un phase de désorption dudit gaz fixé sur ledit gel et d'une phase de récupération dudit gaz désorbé. Cette utilisation est de préférence appliquée à la séparation de l'oxygène de l'air, soit dans le but de produire de l'oxygène pur, soit dans le but d'éliminer l'oxygène de l'air.

Les exemples suivants illustrent l'invention Comme le montrent ces exemples, l'addition de tétraéthoxysilane lors de l'étape de gélification, les variations dans les conditions opératoires, permettent d'obtenir des matériaux de composition et de texture variables, tant en termes de concentration de ligand ou de complexe dans le solide, que de porosité et surface spécifique. Dans des conditions de synthèse rigoureusement identiques, les solides obtenus présentent des caractéristiques identiques, montrant ainsi une bonne reproductibilité de la méthode.

Les avantages de cette méthode résident donc essentiellement dans la possibilité d'ajuster les caractérist+iques du matériau en fonction des exigences du génie des matériaux.

### Partie expérimentale

Différents gels de silice ont été synthétisés en choisissant le 1,4,8,11-tétraazacyclotétra-décane (ou cyclame) comme ligand organique pour la coordination de l'élément métallique. Les différents précurseurs ont été obtenus, selon le schéma suivant, par action du cyclame sur quatre équivalents de différents réactifs silylés de for mule (C), pour former les composés de formule (I) correspondants. Plusieurs substituants se terminant par un groupement -Si(OEt)₃ ou -SiH₃ ont été utilisés: une chaîne aliphatique, des substituants comportant un motif aromatique, une fonction ester ou amide. 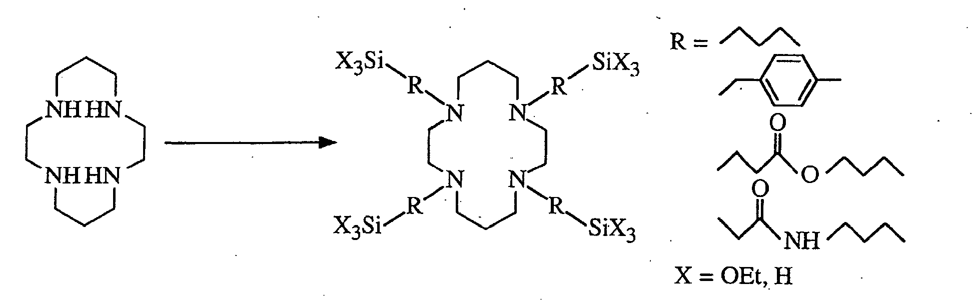 les composés suivants ont ainsi été préparés:

### Composé 1

### 1,4,8,11-tétrakis[3-(triéthoxysilyl) propyl]-1,4,8,11-tétraazacyclotétradécane

Dans un schlenk de 200 ml, sous atmosphère d'azote, on place 2 g (0,01 mole) de cyclame, 12,41 g (0,09 mole) de K₂CO₃ dans 100 ml de CH₃CN (distillé sur P₂O₅). 13,27 g (0,04 mole) de (triéthoxy) (3-iodo propyl) silane sont alors ajoutés. Le milieu réactionnel est porté au reflux pendant 12 h. Après évaporation du solvant, le résidu est repris dans 100 ml de pentane, filtré, et le précipité est lavé deux fois avec 30 ml de pentane. Les filtrats sont rassemblés, le pentane est évaporé et le composé 1 est obtenu sous forme d'une huile légèrement trouble (9,85 g, 97 %).
RMN ¹H (200 MHz, CDCl₃) δ (ppm): 0,58 (m, 8H); 1,23 (t, 36H); 1,55 (m, 12H); 2,39 (m, 8H); 2,51 (m, 8H); 2,54 (s, 8H); 3,83 (q, 24H).
RMN ¹³C (50 MHz, CDCl₃) δ (ppm): 7,0; 17,3; 19,6; 21,9; 49,5; 50,4; 57,3; 57,9.
RMN ²⁹Si (40 MHz, CDCl₃) δ (ppm): - 44,6.
Analyse élémentaire pour C₄₆H₁₀₄N₄O₁₂Si₄
Calculé: C. 54,33 ; H. 10,24 ; N. 5,51
Trouvé: C. 53,9 ; H. 9,93 ; N. 6,27.

### Composé 2:

### 1,4,8,11-tétrakis[[4-(triéthoxysilyl) phényl] méthyl]-1,4,8,11-tétraazacyclotétradécane

En procédant de la même manière que pour le composé 1, à partir de 1,5 g (0,0075 mole) de cyclame, 9,32 g (0,0675 mole) de K₂CO₃ et 11,4 g (0,03 mole) de (triéthoxy) [4-(iodométhyl) phényl] silane, un solide beige est obtenu et après recristallisation dans 15 ml d'éthanol, on obtient le composé 2 sous forme d'une poudre blanche (6,5 g, 72 %).
F = 99,5-100,5 °C.
RMN ¹H (200 MHz, CDCl₃) δ (ppm): 1,29 (t, 36H); 1,77 (m, 4H); 2,54 (t, 8H); 2,63 (s, 8H); 3,46 (s, 8H); 3,90 (q, 24H); 7,34 (d, 8H); 7,60 (d, 8H).
RMN ¹³C (50 MHz, CDCl₃) δ (ppm): 18,6; 24,4; 50,8; 51,9; 59,1; 59,8; 128,8; 129,3; 135,0; 142,9.
RMN ²⁹Si (40 MHz, CDCl₃) δ (ppm): - 56,9.
Analyse élémentaire pour C₆₂H₁₀₄N₄O₁₂Si₄
Calculé: C. 61,58; H. 8,61; N. 4,63.
Trouvé: C. 61,45; H. 8,81; N. 4,59.

### Composé 3:

### 1,4,8,11-tétraazacyclotétradécane-1,4,8,11-tétrapropanoate de tétra[3-(triéthoxysilyl) propyle]

Dans un schlenk de 100 ml, sous atmosphère d'azote, on place 0,5 g (0,0025 mole) de cyclame dans 20 ml d'éthanol. 2,76 g (0,01 mole) d'acrylate de 3-(triéthoxysilyl) propyle sont alors ajoutés. Le milieu réactionnel est porté au reflux pendant 12 h. Après évaporation du solvant, on obtient une huile trouble qui est reprise dans 10 ml de pentane et laissé pendant 1 h à -20 °C. Le précipité blanc formé est filtré, le filtrat est concentré et on obtient le composé 3 sous forme d'une huile limpide (2,36 g, 72 %).
RMN ¹H (200 MHz, CDCl₃) δ (ppm): 0,51 (m, 8H); 1,24 (t, 36H); 1,44 (m, 4H); 1,61 (m, 8H); 2,35 (t, 8H); 2,41 (t, 8H); 2,44 (s, 8H); 2,61 (t, 8H); 3,69 (q, 24H); 3,90 (t, 8H). RMN ¹³C (50 MHz, CDCl₃) δ (ppm): 6,9; 18,7; 22,6; 24,5; 32,9; 50,8; 51,1; 51,5; 58,7; 66,7; 173,1.
RMN ²⁹Si (40 MHz, CDCl₃) δ (ppm): - 45,6
Analyse élémentaire pour C₅₈H₁₂₀N₄O₂₀Si₄
Calculé: C 53,37; H 9,20; N 4,29.
Trouvé: C 53,17; H 9,18; N 4,85.

En procédant de la même manière que ci-dessus, avec l'acrylate de 2-(triéthoxysilyl) éthyle, on obtient le 1,4,8,11-tétraazacyclotétradécane-1,4,8,11-tétrapropanoate de tétra [2-(triéthoxysilyl) éthyle] (composé 8).

### Composé 4:

### 1,4,8,11-tétrakis(3-silylpropyl)-1,4,8,11-tétraazacyclotétradécane

Dans un Schlenk de 150 ml, sous atmosphère d'azote, on place 7,47 g (0,00735 mole) du composé obtenu à l'exemple 1, dans 40 ml d'éther anhydre. Une solution de 1,68 g (0,041 mole) de LiAlH₄ dans 30 ml d'éther anhydre est alors ajoutée goutte à goutte à 0 °C. Le milieu réactionnel est agité pendant 24 h à température ambiante, puis LiAlH₄ en excès est détruit avec 5,5 ml d'acétate d'éthyle à 0 °C. Après 30 mn à température ambiante, les solvants sont évaporés. Le résidu est repris avec du pentane, le solide est filtré, lavé deux fois avec du pentane et le composé 4 est obtenu sous forme d'une huile (2,83 g, 80 %).
RMN ¹H (200 MHz, CDCl₃) δ (ppm): 0,74 (m, 8H); 1,57 (m, 12H); 2,42 (t, 8H); 2,52 (t, 8H); 2,55 (s, 8H); 3,53 (t, 12H).
RMN ¹³C (50 MHz, CDCl₃) δ (ppm): 2,8; 21,9; 23,1; 49,5; 50,5; 56,9;
RMN ²⁹Si (40 MHz, CDCl₃) δ (ppm): - 58,7.

### Composé 5:

### 1,4,8,11-tétrakis[4-silyl phényl) méthyl]-1,4,8,11-tétraazacyclotétradécane

Dans un schlenk de 200 ml, sous atmosphère d'azote, on place 3,75 g (0,0031 mole) du composé obtenu à l'exemple 2, dans 50 ml de THF. Une solution de 0,70 g (0,018 mole) de LiAlH₄ dans 20 ml de THF est alors ajoutée goutte à goutte à 0°C. Le mélange réactionnel est agité 1 h à 0°C puis 12 h à température ambiante. L'excès de LiAlH₄ est détruit avec 3 ml d'acétate d'éthyle. Le mélange réactionnel est filtré sur 20 g de Florisil® et le solvant est évaporé. Le résidu est repris avec 50 ml de CH₂Cl₂, filtré puis le solvant est évaporé. 1,41 g du composé 5 est obtenu sous forme d'une poudre blanche (70%).
RMN ¹H (200 MHz, CDCl₃) δ (ppm): 1,77 (m, 4H); 2,55 (t, 8H); 2,63 (s, 8H); 3,45 (d, 8H); 4,23 (s, 12H); 7,32 (d, 8H); 7,51 (d, 8H).
RMN ¹³C (50 MHz, CDCl₃) δ (ppm): 25,3; 51,0; 51,9; 59,8; 126,5; 129,1; 136,1; 142,4.
RMN ²⁹Si (40 MHz, CDCl₃) δ (ppm): -59,3
Analyse élémentaire pour C₃₈H₅₆N₄Si₄:
Calculé: C 67,06; H 8,24; N 8,24
Trouvé: C 66,76; H 8,00; N 8,06.

### Composé 6:

### N₁,N₂,N₃,N₄-tétrakis[3-(triéthoxysilyl) propyl]1,4,8,11-tétraazacyclotétra-décane-1,4,8,11-tétraacétamide

a) Dans un schlenk de 150 ml, on dissout 38,2 ml (0,16 mole) d'aminopropyltriéthoxysilane et 23,6 ml (0,17 mole) de triéthylamine dans 70 ml de CH₂Cl₂ puis on ajoute une pointe de spatule de 4-diméthylaminopyridine (DMAP). 26,95g (0,17 mole) de chlorure de bromoéthanoyle, dissous dans 20 ml de CH₂Cl₂ sont additionnés goutte à goutte à -30°C, sous agitation. La solution visqueuse et rouge obtenue est agitée 2 h à température ambiante, puis le solvant est évaporé. Le résidu est repris avec 150 ml d'éther; les sels sont filtrés et le solvant est évaporé. On obtient 48,84 g d'un produit brun très visqueux qui, par distillation (127-132° / 0,05 mm) conduit à 11,71g (20%) de 2-bromo-N-[3-(triéthoxysilyl) propyl] acétamide

   [BrCH₂CONH(CH₂)₃Si(OEt)₃].
b) Dans un Schlenk de 60 ml, on introduit 0,5 g (0,0025 mole) de cyclame, 25 ml d'acétonitrile et 3,1 g de K₂CO₃ (0,0022 mole). 3,76 g (0,011 mole) du 2-bromo-N-[3-(triéthoxysilyl) propyl] acétamide préparé au stade a), sont ajoutés goutte à goutte sous agitation. Le mélange réactionnel est porté au reflux pendant 20 h.. Le solvant est ensuite évaporé. Le résidu est lavé avec 2 x 30 ml de pentane chaud puis il est repris avec 70 ml de CH₂Cl₂. Après filtration et évaporation de CH₂Cl₂, on récupère 1,59 g (51%) du composé 6 sous forme d'une poudre blanche.
   RMN ¹H (200 MHz, CDCl₃) δ (ppm): 0,64 (t, 8H); 1,23 (t, 36H); 1,63 (m, 12H); 2,64 (m, 16H) 3,04 (s, 8H); 3,26 (m, 8H); 3,81 (q, 24H); 7,06 (m, 4H).
   RMN ¹³C (50 MHz, CDCl₃) δ (ppm): 8,4; 18,7; 23,9; 24,9; 42,1; 51,4; 52,6; 58,8; 59,1; 170,9.
   RMN ²⁹Si (40 MHz, CDCl₃) δ (ppm): -45,8.
   Analyse élémentaire pour C₅₄H₁₁₆N₈O₁₆Si₄
   Calculé: C 52,09; H 9,32; N 9,00.
   Trouvé: C 49,55; H 8,78; N 9,34.

### Composé 7:

### 4,11-bis[[4-(triéthoxysilyl) phényl] méthyl]-1,4,8,11-tétraazacyclotétradécane-7,14-dione

Dans un schlenck de 200ml, on introduit 2 g (0,0088 mole) de 7,14-dioxocyclame, 3,63 g (0,0026 mole) de K₂CO₃ et 70 ml d'acétonitrile anhydre. 6,7 g (0,018 mole) de (triéthoxy) [(4-iodo phényl) méthyl] silane sont additionnés goutte à goutte. Le mélange réactionnel est porté au reflux pendant 12 h. Le solvant est ensuite évaporé et le précipité obtenu est repris 2 fois avec 70 ml de CH₂Cl₂ et la solution filtrée. Le solvant est évaporé et le solide est lavé 2 fois avec 50 mL de pentane. 5.46g du composé 7 sont obtenus sous forme d'une poudre blanche, qui recristallise dans un mélange CH₂Cl₂/hexane (50/50). Rdt 85%.F. 163-164°C.
RMN ¹H (200 MHz, CDCl₃) δ (ppm): 1,23 (t, 18H); 2,44 (m, 4H); 2,69 (m, 8H); 3,44 (m, 4H); 3,71 (s, 4H); 390 (q, 12H); 7,28 (d, 4H); 7,68 (d, 4H).
RMN ¹³C (50 MHz, CDCl₃) δ (ppm): 18,6; 32,6; 36,2; 49,6; 52,5; 57,8; 59,2; 129,5; 131,2; 135,4; 138,7; 172,5.
RMN ²⁹Si (40 MHz, CDCl₃) δ (ppm): -57,9. Analyse élémentaire pour C₃₆H₆₀N₄O₈Si₂
Calculé: C 59,01; H 8,20; N. 7,65.
Trouvé: C 58,91; H 8,11; N. 7,73.

L'hydrolyse de ces composés de formule (I) selon la voie A ou des complexes métalliques correspondant (voie B) conduit à des solides (III) et (IV) présentant des textures différentes:

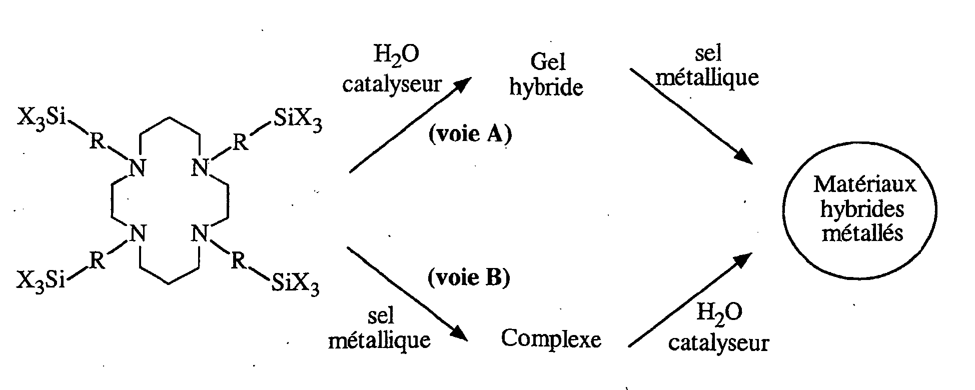

Des cyclames porteurs d'un seul substituant à terminaison -Si(OEt)₃, substitués ou non sur les trois fonctions amine secondaire restantes, ont également été mis en jeu dans un processus de gélification selon la réaction suivante:

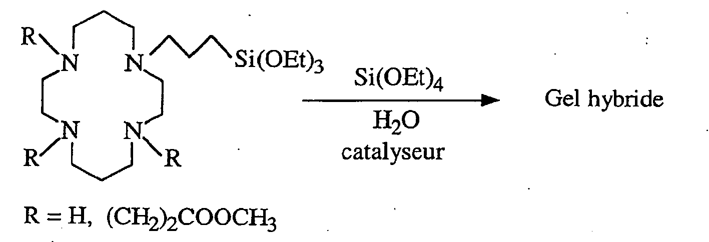

Dans ce cas, l'ajout de tétraéthoxysilane est nécessaire à la polymérisation du précurseur.On obtient alors un co-gel. Cette co-gélification a également été réalisée dans les autres cas afin d'étudier l'influence de l'addition de Si(OEt)₄ dans des proportions variables sur la texture du matériau obtenu. Les autres facteurs de gélification étudiés sont la nature du solvant (MeOH, EtOH, THF, CH₂Cl₂, HCONH₂), la concentration du précurseur (0,05 à 4 moles/dm³), la présence ou l'absence de catalyseur (NH₃ ou fluorure de tétraalkylammonium tel que TBAF) et la température (-20°C à 150°C). Les résultats sont consignés dans le tableau 1 suivant; ils montrent que suivant les conditions de gélification, on obtient des gels plus ou moins condensés, cette propriété étant déduite d'une étude par RMN ²⁹Si à l'état solide; le degré de condensation augmente dans l'ordre T° < T¹ < T² < T³ (Shea K. J., Loy D. A., Webster O. W.; Chem mater. 1989,1, 572-574).Ils montrent aussi, par une analyse BET, que ces gels, plus ou moins condensés, présentent des surfaces spécifiques et des porosités différentes.

Dans le cas d'un précurseur de formule (I) comportant plusieurs atomes d'azote cycliques substitués par un radical de formule générale (B), telle que définie précédemment, on prépare aussi des co-gels par addition de tétraalkoxysilanes, tels que par exemple, le tétraéthoxysilane.

**Tableau 1 : facteurs influençant la texture de gels obtenus par hydrolyse (6H₂O) de**

| 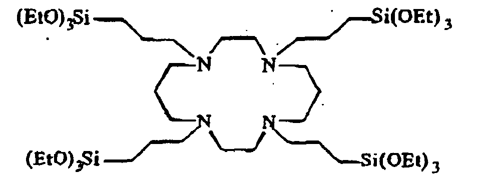 | | | | |
|---|---|---|---|---|
| **Influence du solvant** (1M / TBAF / 20°C) | | | | |
| (a) | EtOH | 17 min | 370 m²/g | T³ > T² |
| (b) | THF | 27 min | 343 m²/g | |
| (c) | HCONH₂ | 30 min | 2 m²/g | |
| (d) | CH₂Cl₂ | 55 min | 454 m²/g | |

| **Influence de la concentration** (EtOH / TBAF / 20°C) | | | | |
|---|---|---|---|---|
| (a) | 1 M | 17 min | 370 m²/g | T³ > T² |
| (e) | 2 M | 10 min | 470 m²/g | T³ ~ T² |
| (f) | 3 M | 7 min | 414 m²/g | T³ > T² |

| **Influence du catalyseur** (LaOH / 1M / 20°C) | | | | |
|---|---|---|---|---|
| (g) | sans | 36 h | 2 m²/g | T⁰ > T¹~T²~T³ |
| (a) | TBAF | 17 min | 370 m²/g | T³ > T² |
| (h) | TBAF (sono) | 15 min | 410 m²/g | T³ > T⁰~T¹~T² |
| (i) | NH₃ | < 24 h | 0 m²/g | |

| **Influence de la température** (EtOH / TBAF / 1 M) | | | | |
|---|---|---|---|---|
| (a) | 20°C | 17 min | 370 m²/g | T³ > T² |
| (j) | 100°C | < 30 min | -800 m²/g | |

| **Dilution par n Si(OEt)** _{**4**} (EtOH / TBAF / 1 M / 20°C) | | | | |
|---|---|---|---|---|
| (a) n=0 | 17 min | 370 m²/g | | T³ > T² |
| (k) n=1 | < 30 min | 386 m²/g | (292 ^{a}+ 95^{b}) | T³ > T² Q³=Q⁴ |
| (l) n=2 | < 30 min | 428 m²/g | (290 ^{a}+ 138^{b}) | T³ < T² Q³=Q⁴ |
| (m) n=5 | < 30 min | 515 m²/g | (299 ^{a}+ 216^{b}) | |
| Si(OEt)₄ | 3 - 4 h | 470 m²/g | (296 ^{a}+ 174^{b}) | |

| | | | | |
|---|---|---|---|---|
| ^{a}Surface microporeuse | | | | |
| ^{b}Surface externe | | | | |

Plusieurs sels métalliques ont été utilisés pour la métallation, avant ou après gélification. Il s'agit de Cu(OAc)₂, CuCl₂, Cu(BF₄)₂, Cu[B(C₆H₅)₄]₂, Cu[(PF₆)]₂, CuSiF₆, Co(OAc)₂, CoCl₂, Co(BF₄)₂, Co[B(C₆H₅)₄]₂, Co[PF₆]₂, et CoSiF₆. La quantité de métal dans les gels métallés a été déterminée par spectroscopie de fluorescence X. Les résultats sont consignés dans les tableaux 3 à 6.

**Tableau 2: Métallation des gels et co-gels par CuCl₂ (Voie A)**

| Gel | Surface spécifique avant métallation (m²/g) | Stoechiométrie ligand/métal | Surface spécifique après métallation (m²/g) | [Cu⁺⁺] (mmol/g) |
|---|---|---|---|---|
| gel (k) | 390 | 1/2 | <10 | 1,46 |
| gel (1) | 430 | 1/2 | <10 | 1,25 |
| gel (m) | 510 | 1/2 | 15 | 0,74 |

**Tableau 3: Métallalion des gels et co-gels par CuCl₂ (Voie A)**

| Gel | Surface spécifique avant métallation (m²/g) | Stoechiométrie ligand/métal | Surface spécifique après métallation (m²/g) | [Co⁺⁺] (mmol/g) |
|---|---|---|---|---|
| gel (m) | 510 | 1/2 | 320 | 0,86 |

Les conditions expérimentales générales sont les suivantes:

### Métallation des précurseurs

La métallation des précurseurs est réalisée avec un ou deux équivalent(s) de sel métallique au reflux pendant 24 h. Les solides obtenus sont lavés avec du pentane, puis séchés sous vide.

### Synthèse des gels

Dans un pilulier, on place dans l'ordre suivant le précurseur, le solvant, la quantité nécessaire d'eau et le catalyseur. Le temps de gélification t_{g} est mesuré à partir de l'instant ou tous les réactifs ont été introduits.

Trois traitements différents ont ensuite été appliqués au gels obtenus:
a) vieillissement 5 jours à température ambiante,broyage pendant 1 mn, lavages à l'éthanol et à l'éther diéthylique; puis séchage à 120 °C / 39-263 Pa (3-20 mmHg) pendant 12 h
b) vieillissement 2 jours à température ambiante puis même traitement que a)
c) vieillissement 5 jours à 100 °C (gélifications en tubes scellés) puis même traitement que a)

### Métallation des gels

Les métallations sont réalisées suivant deux méthodologies :

### a) Complexes de Cu(II).

Dans un ballon de 100 ml, on place le matériau et le sel de cuivre (1 ou 2 éq.) dans 20 ml d'éthanol absolu. Le milieu réactionnel est porté au reflux pendant 12 h, le matériau métallé est filtré, lavé avec de l'éthanol et de l'éther diéthylique et enfin séché à 120 °C / 39-263 Pa (3-20 mmHg) pendant 12 h.

### b) Complexes de Co(II).

Dans un schlenk de 100 ml, sous atmosphère d'azote, on place le matériau et le sel de cobalt (1 ou 2 éq.) dans 20 ml d'éthanol distillé. Le milieu réactionnel est porté au reflux pendant 12 h, le matériau métallé est filtré, lavé avec de l'éthanol

### Gélification des précurseurs métallés.

Les présurseurs métallés sont gélifiés suivant un mode opératoire identique à la gélification des précurseurs non métallés.

| | | | | |
|---|---|---|---|---|
| Gel | Sel métallique Stoechiométrie ligand/métal | Surface spécifique (m²/g) | [Co⁺⁺] (mmol/g) | Vol O₂ adsorbé (Ncclg) |

Une nouvelle série de gels et/ou co-gels a été préparée, et la réactivité de ces matériaux vis-à-vis du dioxygène et du diazote a été étudiée en mesurant l'adsorption à 294K desdits gaz par la décroissance de la pression à volume constant, à l'aide d'un banc d'adsorption Micromeritics TM.

Les résultats sont consignés dans le tableau suivant :

**Tableau 4**

| Précurseur | Gel (BET en m².g⁻¹) | Métal | Contre-ion | Dégazage 10⁶ torr | N₂ Ncc/g | O₂ Ncc/g | [M²⁺] mmol/g | Sélectivité O₂/N₂ |
|---|---|---|---|---|---|---|---|---|
| Composé (1) | (Id) | 1/2 Cu^{2l} | CI⁻ | 1er cycle: | 0,45 | 0,47 | 0,21 | 1 |
| ' 10 | | | | 20°C, 24h | | | | |
| Si(OEt)₄ | | | | 2ème cycle: | 0,54 | 0,75 | | 1,38 |
| | | | | 120°C, 24h | | | | |

## Revendications

1. Procédé de préparation d'un co-gel de polysiloxane métallé, **caractérisé en ce que** :
a) l'on fait réagir un composé de formule (I) : 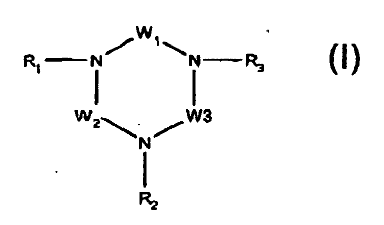 dans laquelle :
W₁, W₂ et W₃, identiques ou différents, représentent indépendamment les uns des autres, chacun un radical divalent choisi parmi ceux représentés par la formule générale (A):
-[(CT₁T₂)ₙ-[N(R₄)]ₚ-(CT₃T₄)ₘ]ₗ- (A)
dans laquelle:
p représente un nombre entier égal à 0 ou à 1,
l représente un nombre entier égal à 1 ou à 2,
n et m, identiques ou différents, représentent chacun, indépendamment l'un de l'autre, un nombre entier inférieur ou égal à 3 et supérieur ou égal à 1,
T₁, T₂, T₃ et T₄, identiques ou différents, représentent ou bien chacun, indépendamment les uns des autres, un atome d'hydrogène, un radical alkyle, linéaire ou ramifié, comportant de 1 à 15 atomes de carbone, ou un radical [(hétéro)aryl]alkyle comportant de 7 à 12 atomes de carbone, ou bien CT₁T₂ et/ou CT₃T₄ représente un groupe divalent (C=O)-,
R₄ représente, un atome d'hydrogène, un radical alkyle, linéaire ou ramifié, comportant de 1 à 15 atomes de carbone, non substitué ou substitué par ou plusieurs groupes fonctionnels, un radical [(hétéro)aryl]alkyle comportant de 7 à 12 atomes de carbone, ou un radical représenté par la formule générale (B)
-[CH₂-CH(OH)]_{y}-(CH₂)ₙ-(Q)_{q}-(CH₂)ᵣ-(Ar)ₛ-(CH₂)ᵣ-(U)ᵤ-(CH₂)ᵥ-Si(X)₃ (B₁),
dans lequel:
o, r, t, v, identiques ou différents, représentent chacun, indépendamment les uns des autres, un nombre entier supérieur ou égal à 0 et inférieur ou égal à 6,
y, q, s et u, identiques ou dü>;'ërents, représentent indépendamment les uns des autres un nombre entier supérieur ou égal à 0 et inférieur ou égal à 1,
Q et U, identiques ou différents, représentent chacun, indépendamment l'un de l'autre un atome d'oxygène, un atome de soufre ou un des groupes, -O-CO-, -CO-O-, -NH-CO--CO-NH- ou -NH-,
Ar représente un groupe amylène et notanunent un groupe phénylène,
X représente un atome d'hydrogène ou un des radicaux méthvxy ou éthoxy, étant entendu,
que lorsque q est égal à 1, la somme y + o est différente de 0,
que lorsque q est égal à 1 et que u est égal à 0, la somme r+t+s+v est différente de 0,
que lorsque u est égal à 1, v est différent de 0,
que lorsque u est égal à 1 et que q est égal à 0, la somme y + o+r+s+t est différente de 0,
que lorsque s est égal à 0, et que q et u sont chacun égaux à 1, la somme r + t est différente de 0, et
que la somme y+o+r+t+vcst inférieure ou égale à 12 ;;
R₁ et R₂, et R₃, identiques ou différents, représentent chacun, indépendamment les uns des autres et de Ra, un atome d'hydrogène, un radical alkyle, linéaire ou ramifié, comportant de 1 à 15 atomes de carbone, non substitué ou substitué par un ou plusieurs groupes fonctionnels, ou un radical [(hétéro)aryl]alkyle comportant de 7 à 12 atomes de carbone, ou un radical représenté par la formule générale (B₁), telle que définie précédemment. étant entendu qu'au moins un de ces azotes cycliques est substitué par un radical de formule (B₁),
avec un tétra alkoxysilane, et
b) l'on soumet le co-gel obtenu à l'étape a) à faction d'un sel métallique.

2. Procédé tel que défini à la revendication 1 pour lequel dans la formule (I), W₁, W₂ et W₃, identiques ou différents, représentent un radical de formule (A₁) correspondant à la formule (A), dans laquelle p est égal à 0, et la somme n + m est égale à 2 ou à 3, et plus particulièrement, pour lequel dans la formule (I) l est égal à 1 et, ou bien W₁, W₂ et W₃, représentent chacun le radical divalent -CH₂-CH₂-CH₂-, ou bien l'un quelconque des trois groupes W₁, W₂ ou W₃ représente le radical divalent CH₂-CH₂-CH₂-, et chacun des deux autres W₂ et W₃, représente le radical divalent -CH₂-CH₂-.

3. Procédé tel que défini à la revendication 1 pour lequel dans la formule (I), W₁ représente un radical divalent de formule (A₂), correspondant à la formule (A) dans laquelle p est égal à 1, et la somme n + m est égale à 2 ou à 3, et W₂ et W₃, identiques ou différents, représentent un radical de formule (A₁) correspondant à la formule (A), dans laquelle p est égal à 0, et la somme n + m est égale à 2 ou à 3, et plus particulièrement, pour lequel dans la formule (I), l est égal à 1 et, ou bien l'un quelconque des trois groupes W₁, W₂ ou W₃ représente le radical -CH₂-CH₂-CH₂-N(R₄)-CH₂-CH₂-, l'un quelconque des deux groupes restant représente le radical -CH₂-CH₂- et le dernier groupe représente le radical -CH₂-CH₂-CH₂-, ou bien l'un quelconque des trois groupes W₁ ,W₂ ou W₃ représente le radical -CH₂-CH₂-CH₂-N(R₄)-CH₂-CH₂-CH₂- ,et les deux autres groupes restants représentent chacun le radical -CH₂-CH₂-CH₂-.

4. Procédé tel que défini à la revendication 1 pour lequel dans la formule (I), W₁ et W₂, identiques ou différents, représentent un radical divalent de formule (A₂), correspondant à la formule (A) dans laquelle p est égal à 1, et la somme n + m est égale à 2 ou à 3 et W₃, représente un radical de formule (A₁) correspondant à la formule (A), dans laquelle p est égal à 0, et la somme n + m est égale à 2 ou à 3.

5. Procédé tel que défini à la revendication 1 pour lequel dans la formule (I), les radicaux R₁, R₂, R₃ et R₄, représentent soit un radical (B₁) soit un atome d'hydrogène, et plus particulièrement pour lequel dans la formule (I), les radicaux R₁, R₂, R₃ et R₄, représentent soit un radical (B₁), soit un atome d'hydrogène.

6. Procédé tel que défini à la revendication 1 pour lequel dans la formule (I), R₁, R₂, R₃ et R₄, représentent soit un radical (B₁), soit un radical -(CH₂)_{w}-C(=O)-V dans lequel V représente un des radicaux NH₂, ou OR₈ dans lequel R₈ représente un radical alkyle comportant de 1 à 4 atomes de carbone et w un nombre entier supérieur ou égal à 1 et inférieur ou égal à 6.

7. Procédé tel que défini à la revendication 1 pour lequel dans la formule (I), le radical de formule (B₁) est choisi parmi les radicaux 3-silyl propyle, (4-silyl phényl) méthyle, 3-(triéthoxysilyl) propyle, 3-[[3-(triéthoxysilyl) propyl] oxy] 2-hydroxy propyle, [4-[[[3-(triéthoxysilyl) propyl] amino] méthyl] phényl] méthyle, 4-[(triéthoxysilyl) phényl] propyle, 3-oxo 3-[[3-(triéthoxysilyl) propyl] oxy] propyle ou 2-oxo 2-[[3-(triéthoxysilyl) propyl] amino] éthyle.

8. Procédé tel que défini à la revendication 1, pour lequel les composés de formule (I) sont les suivants:
le 1,4,8,11-tétrakis[3-(triéthoxysilyl)propyl]1,4,8,11-tétraazacyclotétradécane,
le 1,4,8,11-tétsakis[[4-(triéthoxysilyl) phénol]méthyl]1,4,8,11 - tétraazacyclotétradécane;
le 1,4,8,11-tétraazacyclotétradécane-1,4,8,11-tétrapropanoate de tétra[3-(triéthoxysilyl) propyle] le 1,4,8,11-tétrakis(3-silyl propyl) 1,4,8,11-tétraazacyclotétradécane;
le 1,4,8,11-tétrakis[(4-silyl phétryl) méthyl] 1,4,8,11-tétraazacyclotétradécane;
le N₁,N₂,N₃,N₄-tétrakis[3-(triéthoxysilyl) propyl] 1,4,8,11-tétraazacyclotétradécane-1,4,8,11-tétraacétamide
le 4,11-bis[[4-(triéthoxysilyl) phényl] méthyl] 1,4,8,11-téttaazacyclotëtradécane-7,14-dione.

9. Procédé tel que défini à la revendication 1 pour lequel l'élément métallique est choisi parmi le cobalt ou le cuivre.

10. Utilisation du co-gel de polysiloxane métallé préparé par le procédé tel que défini à l'une des revendications 1 à 9, pour séparer un gaz déterminé d'un mélange de gaz., **caractérisée par** la mise en contact dudit mélange de gaz avec ledit co-gel de polysiloxane métallé, dans des conditions permettant l'absorption dudit gaz à séparer, suivie d'un phase de désorption dudit gaz fixé sur ledit gel et d'une phase de récupération dudit gaz désorbé.

11. Utilisation telle que définie à la revendication 10 appliquée à la séparation de l'oxygène de l'air, soit dans le but de produire de l'oxygène pur, soit dans le but d'éliminer l'oxygène de l'air.

## Claims

1. Process for the preparation of a metallated polysiloxane co-gel, **characterized in that**:
a) a compound of formula (I): 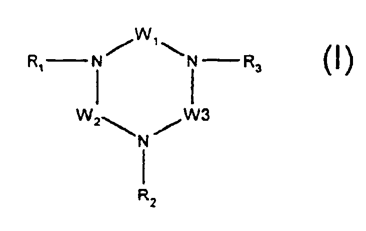 in which:
W₁, W₂ and W₃, which are identical or different, each represent, independently of one another, a divalent radical chosen from those represented by the general formula (A):
-[(CT₁T₂)ₙ-[N(R₄)]ₚ-(CT₃T₄)ₘ]ₗ- (A)
in which:
p represents an integer equal to 0 or to 1,
1 represents an integer equal to 1 or to 2,
n and m, which are identical or different, each represent, independently of one another, an integer less than or equal to 3 and greater than or equal to 1,
T₁, T₂, T₃ and T₄, which are identical or different, either each represent; independently of one another, a hydrogen atom, a linear or branched alkyl radical comprising from 1 to 15 carbon atoms or a [(hetero)aryl]alkyl radical comprising from 7 to 12 carbon atoms or else CT₁T₂ and/or CT₃T₄ represent a divalent group -(C=O)-,
R₄ represents a hydrogen atom, a linear or branched alkyl radical comprising from 1 to 15 carbon atoms which is unsubstituted or substituted by one or more functional groups, a [(hetero)aryl]alkyl radical comprising from 7 to 12 carbon atoms or a radical represented by the general formula (B₁):
-[CH₂-CH(OH)]_{y}-(CH₂)ₒ-(Q)_{q}-(CH₂)ᵣ-(Ar)ₛ-(CH₂)ₜ-(U)ᵤ-(CH₂)ᵥ-Si(X)₃ (B₁),
in which:
o, r, t and v, which are identical or different, each represent, independently of one another, an integer greater than or equal to 0 and less than or equal to 6,
y, q, s and u, which are identical or different, represent, independently of one another, an integer greater than or equal to 0 and less than or equal to 1,
Q and U, which are identical or different, each represent, independently of one another, an oxygen atom, a sulfur atom or one of the -O-CO-, -CO-O-, -NH-CO-, -CO-NH- or -NH- groups,
Ar represents an arylene group and in particular a phenylene group,
X represents a hydrogen atom or one of the methoxy or ethoxy radicals,
it being understood,
that, when q is equal to 1, the sum y+o is other than 0,
that, when q is equal to 1 and when u is equal to 0, the sum r+t+s+v is other than 0,
that, when u is equal to 1, v is other than 0,
that, when u is equal to 1 and when q is equal to 0, the sum y+o+r+s+t is other than 0,
that, when s is equal to 0 and when q and u are each equal to 1, the sum r+t is other than 0, and
that the sum y+o+r+t+v is less than or equal to 12.
R₁, R₂ and R₃, which are identical or different, each represent, independently of one another and of R₄, a hydrogen atom, a linear or branched alkyl radical comprising from 1 to 15 carbon atoms which is unsubstituted or substituted by one or more functional groups, a [(hetero)aryl]alkyl radical comprising from 7 to 12 carbon atoms or a radical represented by the general formula (B₁) as defined above, it being understood that at least one of these cyclic nitrogens is substituted by a radical of formula (B₁), is reacted with a tetraalkoxysilane, and
b) the co-gel obtained in stage a) is subjected to the action of a metal salt.

2. Process as defined in Claim 1 for which, in the formula (I), W₁, W₂ and W₃, which are identical or different, represent a radical of formula (A₁), corresponding to the formula (A) in which p is equal to 0 and the sum n + m is equal to 2 or to 3, and more particularly for which, in the formula (I), l is equal to 1 and either W₁, W₂ and W₃ each represent the divalent radical -CH₂-CH₂-CH₂- or else any one of the three groups W₁, W₂ or W₃ represents the divalent radical -CH₂-CH₂-CH₂- and each of the other two groups represents the divalent radical -CH₂-CH₂-.

3. Process as defined in Claim 1 for which, in the formula (I), W₁ represents a divalent radical of formula (A₂), corresponding to the formula (A) in which p is equal to 1 and the sum n + m is equal to 2 or to 3, and W₂ and W₃, which are identical or different, represent a radical of formula (A₁), corresponding to the formula (A) in which p is equal to 0 and the sum n + m is equal to 2 or to 3, and more particularly for which, in the formula (I), 1 is equal to 1 and either any one of the three groups W₁, W₂ or W₃ represents the radical -CH₂-CH₂-CH₂-N(R₄)-CH₂-CH₂-, either one of the two remaining groups represents the radical -CH₂-CH₂- and the final group represents the radical -CH₂-CH₂-CH₂- or else any one of the three groups W₁, W₂ or W₃ represents the radical -CH₂-CH₂-CH₂-N(R₄)-CH₂-CH₂-CH₂- and the other two remaining groups each represent the radical -CH₂-CH₂-CH₂-.

4. Process as defined in Claim 1 for which, in the formula (I), W₁ and W₂, which are identical or different, represent a divalent radical of formula (A₂), corresponding to the formula (A) in which p is equal to 1 and the sum n + m is equal to 2 or to 3, and W₃ represents a radical of formula (A₁), corresponding to the formula (A) in which p is equal to 0 and the sum n + m is equal to 2 or to 3.

5. Process as defined in Claim 1 for which, in the formula (I), the R₁, R₂, R₃ and R₄ radicals represent either a (B₁) radical or a hydrogen atom and more particularly for which, in the formula (I), the R₁, R₂, R₃ and R₄ radicals represent either a (B₁) radical or a hydrogen atom.

6. Process as defined in Claim 1 for which, in the formula (I), R₁, R₂, R₃ and R₄ represent either a (B₁) radical or a radical -(CH₂)_{w}-C(=O)-V, in which V represents one of the NH₂ or OR₈ radicals, in which R₈ represents an alkyl radical comprising from 1 to 4 carbon atoms, and w represents an integer greater than or equal to 1 and less than or equal to 6.

7. Process as defined in Claim 1 for which, in the formula (I), the radical of formula (B₁) is chosen from the 3-silylpropyl, (4-silylphenyl)methyl, 3-(triethoxysilyl)propyl, 3-[[3-(triethoxysilyl)propyl]oxy]-2-hydroxypropyl, [4-[[[3-(triethoxysilyl)propyl]amino]methyl]phenyl]methyl, 4-[(triethoxysilyl)phenyl]propyl, 3-oxo-3-[[3-(triethoxysilyl)propyl]oxy]propyl or 2-oxo-2-[[3-(triethoxysilyl)propyl]amino]ethyl radicals.

8. Process as defined in Claim 1, for which the compounds of formula (I) are as follows
1,4,8,11-tetrakis[3-(triethoxysilyl)propyl]-1,4,8,11-tetraazacyclotetradecane,
1,4,8,11-tetrakis[[4-(triethoxysilyl)phenyl]methyl]-1,4,8,11-tetraazacyclotetradecane, tetra[3-(triethoxysilyl)propyl] 1,4,8,11-tetraazacyclotetradecane-1,4,8,11-tetrapropanoate,
1,4,8,11-tetrakis(3-silylpropyl)-1,4,8,11-tetraazacyclotetradecane,
1,4,8,11-tetrakis[(4-silylphenyl)methyl]-1,4,8,11-tetraazacyclotetradecane,
N₁,N₂,N₃,N₄-tetrakis[3-(triethoxysilyl)propyl]-1,4,8,11-tetraazacyclotetradecane-1,4,8,11-tetraacetamide,
4,11-bis[[4-(triethoxysilyl)phenyl]methyl]-1,4,8,11-tetraazacyclotetradecane-7,14-dione.

9. Process as defined in Claim 1 for which the metal element is chosen from cobalt or copper.

10. Use of the metallated polysiloxane co-gel prepared by the process as defined in one of Claims 1 to 9 in separating a predetermined gas from a mixture of gases, **characterized in that** the said mixture of gases is brought into contact with the said metallated polysiloxane co-gel under conditions which make possible the absorption of the said gas to be separated, followed by a phase of desorption of the said gas attached to the said gel and by a phase of recovery of the said desorbed gas.

11. Use as defined in Claim 10 applied to the separation of oxygen from the air, either for the purpose of producing pure oxygen or for the purpose of removing oxygen from the air.

## Patentansprüche

1. Verfahren zur Herstellung eines metallierten Polysiloxangels, **dadurch gekennzeichnet, daß** man:
a) eine Verbindung der Formel (I): 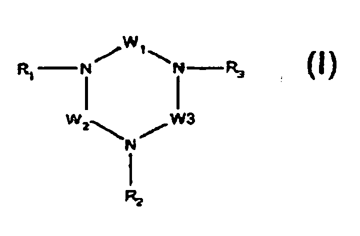 worin:
W₁, W₂ und W₃ gleich oder verschieden sind und jeweils unabhängig voneinander für einen zweiwertigen Rest stehen, der unter denjenigen der allgemeinen Formel (A) ausgewählt ist:
- (CT₁T₂)ₙ-[N(R₄)]ₚ-(CT₃T₄)ₘ]ₗ- (A)
worin:
p für eine ganze Zahl mit einem Wert von 0 oder 1 steht,
1 für eine ganze Zahl mit einem Wert von 1 oder 2 steht,
n und m gleich oder verschieden sind und jeweils unabhängig voneinander für eine ganze Zahl kleiner gleich 3 und größer gleich 1 stehen,
T₁, T₂, T₃ und T₄ gleich oder verschieden sind und entweder jeweils unabhängig voneinander für ein Wasserstoffatom, einen linearen oder verzweigten Alkylrest mit 1 bis 15 Kohlenstoffatomen öder einen [(Hetero)aryl]alkylrest mit 7 bis 12 Kohlenstoffatomen stehen oder CT₁T₂ und/oder CT₃T₄ für eine zweiwertige Gruppe -(C=O)- stehen,
R₄ für ein Wasserstoffatom, einen linearen oder verzweigten Alkylrest mit 1 bis 15 Kohlenstoffatomen, der gegebenenfalls durch eine oder mehere funktionelle Gruppen substituiert ist,
einen [(Hetero)]aryl] alkylrest mit 7 bis 12 Kohlenstoffatomen oder einen Rest der allgemeinen Formel (B₁) steht:
-[CH₂-CH(OH)]_{y}-(CH₂)ₒ-(Q)_{q}-(CH₂)ᵣ-(Ar)ₛ-(CH₂)ₜ-(U)ᵤ-(CH₂)ᵥ₋Si(X)₃ (B₁),
worin:
o, r, t und v gleich oder verschieden sind und jeweils unabhängig voneinander für eine ganze Zahl größer gleich 0 und kleiner gleich 6 stehen,
y, q, s und u gleich oder verschieden sind und jeweils unabhängig voneinander für eine ganze Zahl größer gleich 0 und kleiner gleich 1 stehen,
Q und U gleich oder verschieden sind und jeweils unabhängig voneinander für ein Sauerstoffatom, ein Schwefelatom oder eine der Gruppen -O-CO-, -CO-O-, -NH-CO-, -CO-NH- oder -NH- stehen,
Ar für eine Arylengruppe und insbesondere eine Phenylengruppe steht,
X für ein Wasserstoffatom oder einen Methoxy- oder Ethoxyrest steht,
mit den Maßgaben, daß
die Summe y + o von 0 verschieden ist, wenn q gleich 1 ist,
die Summe r + t + s + v von 0 verschieden ist, wenn q gleich 1 ist und u gleich 0 ist,
v von 0 verschieden ist, wenn u gleich 1 ist,
die Summe y + o + r + s + t von 0 verschieden ist, wenn u gleich 1 ist und q gleich 0 ist,
die Summe r + t von 0 verschieden ist, wenn s gleich 0 ist und q und u jeweils gleich 1 sind, und
die Summe y + o + r + t + v kleiner gleich 12 ist;
R₁, R₂ und R₃ gleich oder verschieden sind und entweder jeweils unabhängig voneinander und von R₄ für ein Wasserstoffatom, einen linearen oder verzweigten Alkylrest mit 1 bis 15 Kohlenstoffatomen, der gegebenenfalls durch eine oder mehrere funktionelle Gruppen substituiert ist, oder einen [(Hetero)aryl]alkylrest mit 7 bis 12 Kohlenstoffatomen oder einen Rest der allgemeinen Formel (B₁) gemäß obiger Definition stehen, mit der Maßgabe, daß mindestens eines der Ringstickstoffatome durch einen Rest der Formel (B₁) substituiert ist,
mit einem Tetraalkoxysilan umsetzt und
b) auf das aus Schritt a) erhaltene Cogel ein Metallsalz einwirken läßt.

2. Verfahren nach Anspruch 1, bei dem in der Formel (I) W₁, W₂ und W₃ gleich oder verschieden sind und für einen Rest der Formel (A₁), der der Formel (A), worin p gleich 0 ist und die Summe n + m gleich 2 oder 3 ist, entspricht, stehen und insbesondere in der Formel (I) l gleich 1 ist und entweder W₁, W₂ und W₃ jeweils für den zweiwertigen Rest -CH₂-CH₂₋CH₂- stehen oder eine der drei Gruppen W₁, W₂ und W₃ für den zweiwertigen Rest -CH₂-CH₂-CH₂- steht und die anderen beiden Gruppen W₂ und W₃ jeweils für den zweiwertigen Rest -CH₂-CH₂- stehen.

3. Verfahren nach Anspruch 1, bei dem in der Formel (I) W₁ für einen zweiwertigen Rest der Formel (A₂), der der Formel (A), worin p gleich 1 ist und die Summe n + m gleich 2 oder 3 ist, entspricht, steht und W₂ und W₃ gleich oder verschieden sind und für einen Rest der Formel (A₁), der der Formel (A), worin p gleich 0 ist und die Summe n + m gleich 2 oder 3 ist, entspricht, stehen und insbesondere in der Formel (I) l gleich 1 ist und entweder eine der drei Gruppen W₁, W₂ oder W₃ für den Rest -CH₂₋CH₂-CH₂-N(R₄)-CH₂-CH₂ steht, eine der beiden übrigen Gruppen für den Rest -CH₂-CH₂- steht und die letzte Gruppe für den Rest -CH₂-CH₂-CH₂- steht oder eine der drei Gruppen W₁, W₂ oder W₃ für den Rest -CH₂₋CH₂-CH₂-N(R₄)-CH₂-CH₂-CH₂- steht und die anderen beiden übrigen Gruppen jeweils für den zweiwertigen Rest -CH₂-CH₂-CH₂- stehen.

4. Verfahren nach Anspruch 1, bei dem in der Formel (I) W₁ und W₂ gleich oder verschieden sind und für einen zweiwertigen Rest der Formel (A₂), der der Formel (A), worin p gleich 1 ist und die Summe n + m gleich 2 oder 3 ist, entspricht, stehen und W₃ für einen Rest der Formel (A₁), der der Formel (A), worin p gleich 0 ist und die Summe n + m gleich 2 oder 3 ist, entspricht, stehen.

5. Verfahren nach Anspruch 1, bei dem in der Formel (I) die Reste R₁, R₂, R₃ und R₄ für einen Rest (B₁) oder ein Wasserstoffatom stehen und insbesondere in der Formel (I) die Reste R₁, R₂, R₃ und R₄ für einen Rest (B₁) oder ein Wasserstoffatom stehen.

6. Verfahren nach Anspruch 1, bei dem in der Formel (I) R₁, R₂, R₃ und R₄ für einen Rest (B₁) oder einen Rest -(CH₂)_{w}-C(=O)-V, worin V für einen der Reste NH₂ oder OR₈, worin R₈ für einen Alkylrest mit 1 bis 4 Kohlenstoffatomen steht, steht und w für eine ganze Zahl größer gleich 1 und kleiner gleich 6 steht, stehen.

7. Verfahren nach Anspruch 1, bei dem in der Formel (I) der Rest der Formel (B₁) unter den Resten 3-Silylpropyl, (4-Silylphenyl)methyl, 3-(Triethoxysilyl)propyl, 3-[[3-(Triethoxysilyl)propyl]oxy]-2-hydroxypropyl, [4-[[[3-(Triethoxysilyl)propyl]amino]methyl]-phenyl]methyl, 4-[(Triethoxysilyl)phenyl]propyl, 3-Oxo-3-[[3-(triethoxysilyl)propyl]oxy]propyl oder 2-Oxo-2-[[3-(triethoxysilyl)propyl]amino]ethyl ausgewählt ist.

8. Verfahren nach Anspruch 1, bei dem es sich bei den Verbindungen der Formel (I) um die folgenden handelt:
1,4,8,11-Tetrakis[3-(triethoxysilyl)propyl]-1,4,8,11-tetraazacyclotetradecan,
1,4,8,11-Tetrakis[[4-(triethoxysilyl)phenyl]-methyl]-1,4,8,11-tetraazacyclotetradecan,
1,4,8,11-Tetraazacyclotetradecan-1,4,8,11-tetrapropansäuretetra[3-(triethoxysilyl)propyl]ester,
1,4,8,11-Tetrakis(3-silylpropyl)-1,4,8,11-tetraazacyclotetradecan,
1,4,8,11-Tetrakis[(4-silylphenyl)methyl]-1,4,8,11-tetraazacyclotetradecan,
N₁,N₂,N₃,N₄-Tetrakis[3-(triethoxysilyl)propyl]-1,4,8,11-tetraazacyclotetradecan-1,4,8,11-tetraacetamid,
4,11-Bis[[4-(triethoxysilyl)phenyl]methyl]-1,4,8,11-tetraazacyclotetradecan-7,14-dion.

9. Verfahren nach Anspruch 1, bei dem man das Metallelement unter Cobalt oder Kupfer auswählt.

10. Verwendung des nach einem Verfahren gemäß einem der Ansprüche 1 bis 9 hergestellten metallierten Polysiloxan-Cogels zur Abtrennung eines vorgegebenen Gases aus einem Gasgemisch, **dadurch gekennzeichnet, daß** man das Gasgemisch mit dem metallierten Polysiloxan-Cogel unter Bedingungen, unter denen das abzutrennende Gas absorbiert werden kann, in Berührung bringt und danach das an dem Gel gebundene Gas desorbiert und das desorbierte Gas zurückgewinnt.

11. Verwendung nach Anspruch 10 zur Abtrennung von Sauerstoff aus der Luft zwecks Produktion von reinem Sauerstoff oder zwecks Entfernung des Sauerstoffs aus der Luft.
